# EUROPEAN PATENT SPECIFICATION

(11) **EP 4 321 268 B1**
(45) Date of publication and mention of the grant of the patent: **27.11.2024**
(21) Application number: 23177955.4
(22) Date of filing: 07.06.2023
(51) Int. Cl.: B21B 38/02

(54) **SENSOR ROLLER UNIT**
SENSORROLLENEINHEIT
UNITÉ DE ROULEAU DE CAPTEUR

(30) Priority: 12.08.2022 JP 2022128670
(43) Date of publication of application: 14.02.2024
(73) Proprietor: KABUSHIKI KAISHA KOBE SEIKO SHO (KOBE STEEL, LTD.), Hyogo 651-8585 (JP)
(72) Inventor: NAGANO, Keitaro, Takasago-shi, 676-8670 (JP); ASANO, Fumiki, Takasago-shi, 676-8670 (JP); KAWAGUCHI, Hiroshi, Takasago-shi, 676-8670 (JP)
(74) Representative: TBK

(56) References cited:
- EP-A1- 2 756 890
- EP-A1- 3 907 015
- WO-A1-03/061865
- DE-U1- 202014 006 820
- US-A1- 2021 078 060

## Description

### Technical Field

The present invention relates to a sensor roller unit.

### Background Art

Conventionally, a sensor roller unit that measures a shape of a rolled material rolled by a rolling mill is known. JP H08 184429 A discloses a shape sensing roll arranged on the entry side or the exit side of a rolling line as such a sensor roller unit. This shape sensing roll has a core shaft having a hollow portion and a plurality of sensors placed along the axis direction. In addition, in this shape sensing roll, a thin sleeve is fitted onto an outer periphery of the core shaft. Cables of the sensors are pulled out to an outer portion of the shape sensing roll via a hollow inner portion of the core shaft, which is positioned radially inward. Such a shape sensing roll detects the load by receiving a load from the rolled material while the shape sensing roll is rotated. Based on this detection result, a shape of the rolled material is calculated.

In the technique described in JP H08 184429 A, since the cables of the sensors are pulled out to the outside via the hollow inner portion of the core shaft, a hollow-shaped core shaft is essential in an inner portion of a sensor roller.

WO 03/061865 A1 discloses a sensor roller unit as specified in the preamble of claim 1. A sensor is housed in a bore that extends along an axis direction on a radially outer side of a sensor roller. A cable of the sensor is pulled out to the outside via a transverse channel communicating with a central cable duct in a journal of the sensor roller.

### Summary of Invention

An object of the present invention is to provide a sensor roller unit in which an outer diameter of a sensor roller can be made smaller than a conventional sensor roller unit.

A sensor roller unit of the present invention includes a sensor roller having a rotation center axis, and a sensor housing portion capable of housing a sensor and a cable, and a journal coupled to the sensor roller along the axis direction. The sensor housing portion is formed to extend in the axis direction on the radially outer side of the rotation center axis. The journal has a hollow portion communicating with the sensor housing portion along the axis direction and receiving the cable. On a section perpendicular to the axis direction, a maximum distance from the rotation center axis to an inner surface of the hollow portion of the journal is set to be larger than a minimum distance from the rotation center axis to the sensor housing portion.

According to the present configuration, the hollow portion of the journal communicates with the sensor housing portion along the axis direction. Thus, there is no need for providing a hollow portion for making the cable pass through in an inner portion of the sensor roller, and it is possible to reduce a diameter of the sensor roller. It is also possible to easily pull out the cable from the sensor housing portion to the hollow portion. In addition, even in a case where a plurality of sensors is arranged at intervals in the circumferential direction of the sensor roller on the section perpendicular to the axis direction, the hollow portion can receive the cable from each of the sensors.

The hollow portion of the journal may have a circular shape on the section perpendicular to the axis direction.

According to the present configuration, irrespective of the position of the sensor housing portion in the circumferential direction of the sensor roller, it is possible to easily pull out the cable from the sensor housing portion to the hollow portion. In addition, even in a case where a plurality of sensors is arranged at intervals in the circumferential direction of the sensor roller on the section perpendicular to the axis direction, the hollow portion can receive the cable from each of the sensors.

The hollow portion of the journal may include a cylindrical shape about the rotation center axis.

According to the present configuration, irrespective of the position of the sensor housing portion in the circumferential direction of the sensor roller on the section perpendicular to the rotation axis, it is possible to easily pull out the cable from the sensor housing portion to the hollow portion.

The sensor housing portion may have a cylindrical shape having a center that extends along the axis direction.

According to the present configuration, compared to a case where a sensor housing portion has a rectangular shape on a section, it is possible to easily form the sensor housing portion in the sensor roller.

The sensor roller unit may further include a cable bundle portion arranged on the axially outer side of the journal in view from the sensor roller, the cable bundle portion receiving the cable from the hollow portion and bundling the cable.

According to the present configuration, there is no need for providing a cable bundle portion in an inner portion of the journal, and it is possible to reduce a diameter of the journal and to downsize a bearing portion by which the journal is axially supported.

The hollow portion of the journal may have a tapered portion inclined to spread toward the sensor housing portion.

According to the present configuration, the cable is more easily arranged from the sensor housing portion to the hollow portion, and it is possible to further reduce the diameter of the sensor roller.

According to the present invention, it is possible to provide a sensor roller unit in which an outer diameter of a sensor roller can be made smaller than a conventional sensor roller unit.

### Brief Description of Drawings

Fig. 1 is a schematic view showing a state where a sensor roller unit according to an embodiment of the present invention is arranged on the exit side of a rolling mill;
Fig. 2 is a sectional side view of the sensor roller unit according to the embodiment of the present invention;
Fig. 3 is a sectional view along the arrows III-III of Fig. 2; and
Fig. 4 is a sectional view along the arrows IV-IV of Fig. 2.

### Description of Embodiments

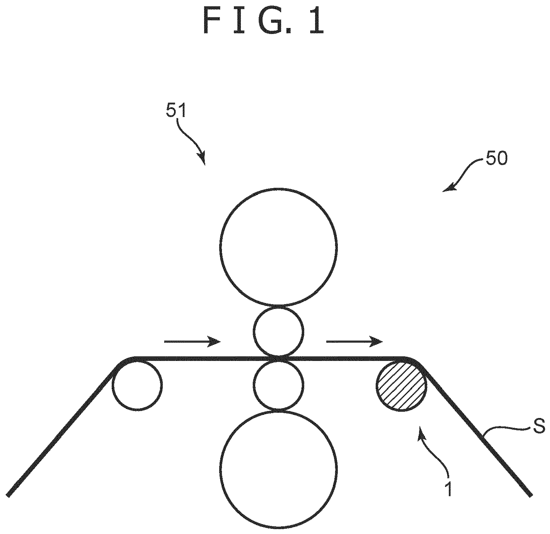

Hereinafter, a sensor roller unit 1 according to an embodiment of the present invention will be described with reference to the drawings. Fig. 1 is a schematic view showing a state where the sensor roller unit 1 according to the embodiment of the present invention is arranged on the exit side of a rolling mill 50.

As shown in Fig. 1, the sensor roller unit 1 is used, for example, for measuring the flatness (shape) of a rolled material S fed from a rolling portion 51 of the rolling mill 50. The sensor roller unit 1 measures a load (tensile force) received from the rolled material S and outputs a signal corresponding to the measured load. A calculation device (not shown) receives the signal and calculates the flatness of the rolled material S by evaluating a balance of the load (tension distribution). It is noted that the sensor roller unit 1 may measure other shapes of objects to be measured.

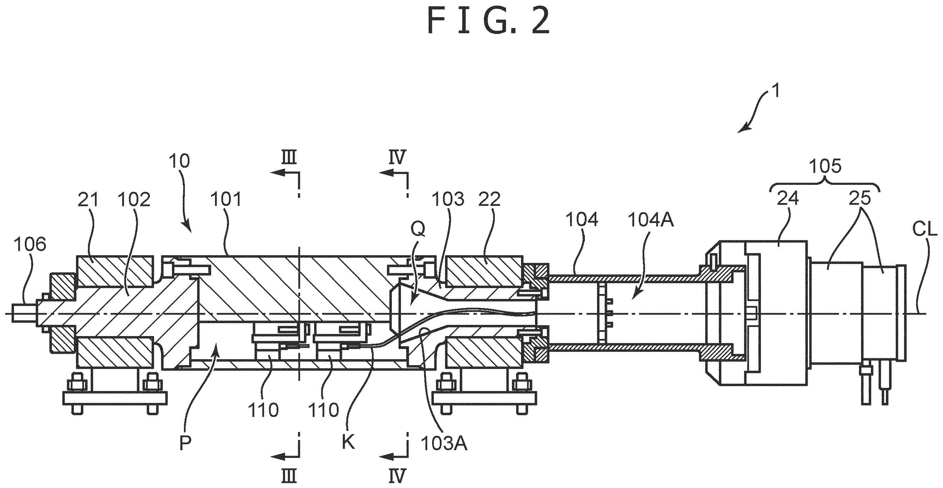

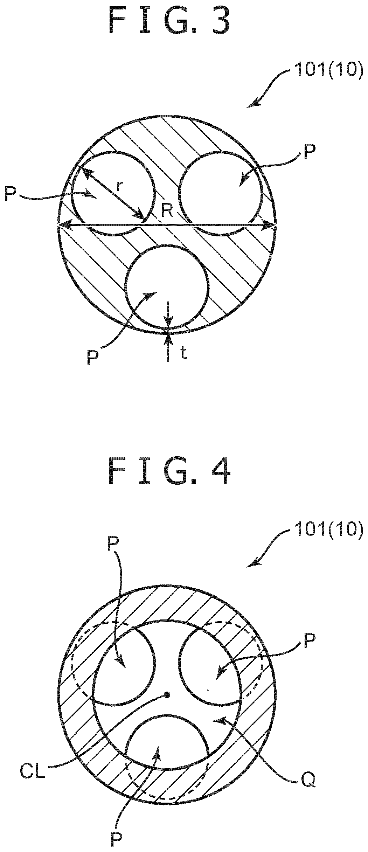

Fig. 2 is a sectional side view of the sensor roller unit 1 according to the present embodiment. It is noted that hereinafter, for explanation, the right side on the paper plane in Fig. 2 will sometimes be referred to as the axially outer side (anti-driving side), and the left side on the paper plane will sometimes be referred to as the axially inner side (driving side). In addition, Fig. 3 is a sectional view along the arrows III-III of Fig. 2. Fig. 4 is a sectional view along the arrows IV-IV of Fig. 2.

The sensor roller unit 1 has a rotating body 10. The rotating body 10 is axially supported by an inside bearing portion 21 and an outside bearing portion 22 so as to be rotatable about a rotation center axis CL.

The rotating body 10 has a sensor roller 101, an inside journal 102, an outside journal 103 (journal), a cable bundle portion 104A, a signal processing portion 105, and a driving force input portion 106.

The sensor roller 101 is a member that houses a plurality of sensors 110 in an inner portion, and the member to be contacted with an object to be measured such as the rolled material. The sensor roller 101 has a columnar shape having the rotation center axis CL. In the inner portion of the sensor roller 101, a plurality of sensor housing portions P is formed so as to extend along the axis direction on the radially outer side of the rotation center axis CL. The plurality of sensor housing portions P is arranged at intervals along the circumferential direction. In the present embodiment, three sensor housing portions P are arranged at equal intervals of 120 degrees, for example. Each of the sensor housing portions P has a cylindrical shape having a center that extends along the axis direction. In addition, each of the sensor housing portions P can house the sensors 110 and cables K pulled out from the sensors 110. Load sensors, etc., can be used as the sensors 110.

In the present embodiment, as an example, two sensors 110 are respectively fixed to an inner peripheral surface of one sensor housing portion P so that the two sensors 110 are arranged at intervals in the axis direction in the one sensor housing portion P. It is noted that each of the sensor housing portions P is exposed respectively in both end portions in the axis direction of the sensor roller 101. In other words, each of the sensor housing portions P is formed to pass through the sensor roller 101 in the axis direction. It is noted that the sensor housing portion P may be exposed only on one side in the axis direction of the sensor roller 101.

A description will be given with reference to Fig. 3. The plurality of sensor housing portions P formed in the sensor roller 101 has a diameter r smaller than a diameter R of the sensor roller 101. In addition, a thin portion having a thickness t is formed between the inner peripheral surface of the sensor housing portion P and an outer peripheral surface of the sensor roller 101.

The inside journal 102 is a part of the rotating body 10 axially supported by the inside bearing portion 21. The inside journal 102 is arranged on the axially inner side of the sensor roller 101 and coupled to the sensor roller 101 by a plurality of bolts along the axis direction. In addition, the inside journal 102 seals an inside end portion of each of the sensor housing portions P of the sensor roller 101. The inside journal 102 is rotated integrally with the sensor roller 101. In the present embodiment, an intermediate part of the inside journal 102 is axially supported by the inside bearing portion 21. In addition, a large diameter part of the inside journal 102 is fixed to the sensor roller 101. The shape of the inside journal 102 is not limited to these shapes.

The outside journal 103 is a part of the rotating body 10 axially supported by the outside bearing portion 22. The outside journal 103 is arranged on the axially outer side of the sensor roller 101 (on the opposite side of the inside journal 102) and coupled to the sensor roller 101 by a plurality of bolts along the axis direction. In addition, the outside journal 103 is rotated integrally with the sensor roller 101. In the present embodiment, a small diameter part of the outside journal 103 is axially supported by the outside bearing portion 22. In addition, a large diameter part of the outside journal 103 is fixed to the sensor roller 101. It is noted that the small diameter part of the outside journal 103 projects on the axially outer side of the outside bearing portion 22 and is coupled to the cable bundle portion 104A. The shape of the outside journal 103 is not limited to these shapes.

Further, a hollow portion Q is formed in the outside journal 103. The hollow portion Q respectively communicates with the plurality of sensor housing portions P in the sensor roller 101 along the axis direction and receives a cable K of each of the sensors 110. It is noted that, in the present embodiment, as shown in Fig. 2, the cables K pulled out from the sensors 110 extend toward the axially outer side (anti-driving side).

The hollow portion Q described above has a cylindrical shape about the rotation center axis CL. In addition, the hollow portion Q has a taper 103A (tapered portion) inclined to spread toward the sensor housing portions P. As shown in Fig. 2, in the hollow portion Q, the taper 103A is formed in an axially inner side part, and a part having a fixed inner diameter is provided in an axially outer side part (part axially supported by the outside bearing portion 22).

Further, a description will be given with reference to Fig. 4. The hollow portion Q of the outside journal 103 respectively communicates with radially inner side parts of the three sensor housing portions P of the sensor roller 101. In other words, regarding an arrangement of Fig. 4, in a cross-sectional view of a section perpendicular to the axis direction, a radius (maximum distance) from the rotation center axis CL to an inner surface of the hollow portion Q is set to be larger than a minimum distance from the rotation center axis CL to the sensor housing portion P.

The cable bundle portion 104A receives the cables K from the hollow portion Q and bundles the cables K. The cable bundle portion 104A is arranged on the axially outer side of the outside journal 103 in view from the sensor roller 101, and it is coupled to the outside journal 103 by a plurality of bolts, etc. via a cable bundle portion outer tube 104. The cable bundle portion outer tube 104 has a cylindrical shape and has a cable connection portion (not shown) in an inner portion. The cable connection portion communicates with the hollow portion Q of the outside journal 103 along the axis direction. In addition, the cable bundle portion 104A has the function of bundling the cables K of the plurality of sensors 110. It is noted that the cables K placed in the cable bundle portion 104A are not shown in Fig. 2.

Inside the signal processing portion 105, a rotation portion 24 of the signal processing portion 105 is arranged, and the rotation portion 24 receives detection results (signals) of the plurality of sensors 110 outside the rotating body 10. The signal processing portion 105 is coupled to the cable bundle portion 104A and respectively receives the plurality of cables K. The signal processing portion 105 has a transmission portion (not shown) respectively connected to the cable K of each of the sensors 110.

Outside the signal processing portion 105, a fixed portion 25 of the signal processing portion 105 is arranged, and the fixed portion 25 receives signals transmitted from the rotation portion 24 of the signal processing portion 105 in a contact manner or in a contactless manner, and the fixed portion 25 inputs the signals to the calculation device described above. As a result, the calculation device acquires information corresponding to the magnitude of the load received by each of the sensors 110. It is noted that the fixed portion 25 is fixed to an installation place of the rolling mill 50 without rotating, similarly to the inside bearing portion 21 and the outside bearing portion 22, and that the fixed portion 25 is connected to an outside end portion of the rotating body 10. A sensor roller device is configured by the sensor roller unit 1, the inside bearing portion 21, the outside bearing portion 22, and the fixed portion 25.

The driving force input portion 106 receives a driving force from a motor (not shown). Upon receiving the driving force, the rotating body 10 is rotated about the rotation center axis CL.

The sensor roller 101, the inside journal 102, the outside journal 103, the cable bundle portion 104A, and the signal processing portion 105 described above are integrally rotated about the rotation center axis CL.

As described above, in the present embodiment, the hollow portion Q of the outside journal 103 communicates with the sensor housing portions P along the axis direction. Therefore, in the sensor roller 101, it is not necessary for forming a hollow portion extending in the axis direction and being further radially inward than the sensor housing portions P. As a result, it is possible to reduce the diameter of the sensor roller 101, for example, the outer diameter of 200 mm or less. Further, as shown in Fig. 3, it is possible to enhance the rigidity of the sensor roller 101 by using a region on the radially inner side of the sensor housing portions P of the sensor roller 101 as a solid portion. In the case that the thickness t of the thin portion outside the sensor housing portions P is reduced as in Fig. 3, it is possible to highly precisely detect the load (tensile force) that the sensors 110 (Fig. 2) receive from the object to be measured such as the rolled material. In particular, even in a case of the small load, since the sensors 110 are arranged at positions relatively close to the rolled material, it is possible to detect a change in the load with good precision.

In addition, in the sensor roller unit 1 according to the present embodiment, it is possible to shorten an axial length of the sensor roller 101. Therefore, for example, it is also possible to detect a shape (flatness) of a rolled material having as a small width as 300 mm or less with good precision. It is noted that, by reducing the diameter and shortening the length of the sensor roller 101, it is possible to reduce the cost of the sensor roller unit 1.

In addition, as described above, viewed along the axis direction, the radius (maximum distance) from the rotation center axis CL to the inner surface of the hollow portion Q is set to be larger than the minimum distance from the rotation center axis CL to the sensor housing portion P (see Fig. 4). Therefore, it is possible to easily pull out the cables K from the sensor housing portions P to the hollow portion Q (easily cable drawing effect). In addition, even in a case where the plurality of sensors 110 is arranged at intervals in the circumferential direction of the sensor roller 101 on the section perpendicular to the axis direction, the hollow portion Q can receive the cable K from each of the sensors 110.

In particular, in the present embodiment, the hollow portion Q has a circular shape on the section perpendicular to the axis direction. According to such a configuration, as shown in Fig. 4, the hollow portion Q is open so that the hollow portion Q can receive the cables K over the entire region in the circumferential direction. Thus, irrespective of the positions of the sensor housing portions P in the circumferential direction of the sensor roller 101 on the section perpendicular to the rotation axis, it is possible to easily pull out the cables from the sensor housing portions P to the hollow portion Q.

In addition, in the present embodiment, the hollow portion Q of the outside journal 103 includes a cylindrical shape about the rotation center axis CL. Even in such a configuration, irrespective of the positions of the sensor housing portions P in the circumferential direction of the sensor roller 101 on the section perpendicular to the rotation axis, it is possible to easily pull out the cables K from the sensor housing portions P to the hollow portion Q.

In addition, in the present embodiment, each of the sensor housing portions P has a cylindrical shape having a center that extends along the axis direction. Thus, compared to a case where a sensor housing portion P has a rectangular shape on a section, etc., it is possible to easily form the sensor housing portions P in the sensor roller 101.

In addition, in the present embodiment, the plurality of sensor housing portions P is arranged at intervals in the circumferential direction and the hollow portion Q communicates with the plurality of sensor housing portions P along the axis direction (see Fig. 3). As a result, by arranging the sensors 110 in the plurality of sensor housing portions P, it is possible to enhance detection precision of the sensors 110. In addition, the hollow portion Q can stably receive the cables K of the plurality of sensors.

In addition, the hollow portion Q of the outside journal 103 has the taper 103A inclined to spread toward the sensor housing portions P. According to such a configuration, the cables K are more easily arranged from the sensor housing portions P to the hollow portion Q, and it is possible to further reduce the diameter of the sensor roller 101.

Further, in the present embodiment, the cable bundle portion 104A is arranged on the axially outer side of the outside journal 103 in view from the sensor roller 101, so the cable bundle portion 104A has a function receiving the cables K from the hollow portion Q and bundling the cables K. According to such a configuration, there is no need for providing the cable bundle portion 104A in an inner portion of the outside journal 103, and it is possible to reduce a diameter of the outside journal 103 and to downsize the bearing portion by which the outside journal 103 is axially supported.

The sensor roller unit 1 according to the embodiments of the present invention is described above. It is noted that the present invention is not limited to these embodiments. Modified embodiments described below are available as the sensor roller unit according to the present invention.
(1) In the embodiments described above, the embodiments in which the rotating body 10 of the sensor roller unit 1 has the cable bundle portion 104A are described. However, the cable bundle portion 104A is not necessary for the rotating body 10, and each of the cables K may be directly passed from the outside journal 103 to the signal processing portion 105.
(2) In addition, the sectional shape of the sensor housing portions P formed in the sensor roller 101 is not limited to a circular shape but may be other shapes such as a rectangular shape. Similarly, the sectional shape of the hollow portion Q formed in the outside journal 103 is not limited to a circular shape. In addition, the taper 103A is not necessary for the outside journal 103.

### Industrial Applicability

The present invention can be applied to, for example, a sensor roller unit that measures a shape of a rolled material rolled by a rolling mill.

## Claims

1. A sensor roller unit (1) comprising:
a sensor roller (101) having a rotation center axis (CL), and a sensor housing portion (P) capable of housing a sensor (110) and a cable (K); and
a journal (103) coupled to the sensor roller (101) along the axis direction, wherein
the sensor housing portion (P) is formed to extend along the axis direction on the radially outer side of the rotation center axis (CL), and
the journal (103) has a hollow portion (Q) communicating with the sensor housing portion (P) along the axis direction and receiving the cable (K),
**characterized in that**
on a section perpendicular to the axis direction, a maximum distance from the rotation center axis (CL) to an inner surface of the hollow portion (Q) of the journal (103) is set to be larger than a minimum distance from the rotation center axis (CL) to the sensor housing portion (P).

2. The sensor roller unit (1) according to claim 1, wherein
the hollow portion (Q) of the journal (103) has a circular shape on the section perpendicular to the axis direction.

3. The sensor roller unit (1) according to claim 2, wherein
the hollow portion (Q) of the journal (103) includes a cylindrical shape about the rotation center axis (CL).

4. The sensor roller unit (1) according to any one of claims 1 to 3, wherein
the sensor housing portion (P) has a cylindrical shape having a center that extends along the axis direction.

5. The sensor roller unit (1) according to claim 1 or 2, further comprising:
a cable bundle portion (104A) arranged on the axially outer side of the journal (103) in view from the sensor roller (101), the cable bundle portion receiving the cable (K) from the hollow portion (Q) and bundling the cable (K).

6. The sensor roller unit (1) according to claim 1 or 2, wherein
the hollow portion (Q) of the journal (103) has a tapered portion (103A) inclined to spread toward the sensor housing portion (P).

## Patentansprüche

1. Sensorrolleneinheit (1), die Folgendes umfasst:
eine Sensorrolle (101), die eine Rotationsmittelachse (CL) und einen Sensorbeherbergungsabschnitt (P) hat, der dazu imstande ist, einen Sensor (110) und ein Kabel (K) zu beherbergen; und
einen Zapfen (103), der entlang der Achsenrichtung an die Sensorrolle (101) gekoppelt ist, wobei
der Sensorbeherbergungsabschnitt (P) so ausgebildet ist, dass er sich auf der radial äußeren Seite der Rotationsmittelachse (CL) entlang der Achsenrichtung erstreckt, und
der Zapfen (103) einen hohlen Abschnitt (Q) hat, der entlang der Achsenrichtung mit dem Sensorbeherbergungsabschnitt (P) in Verbindung steht und das Kabel (K) aufnimmt,
**dadurch gekennzeichnet, dass**
auf einem Schnitt senkrecht zur Achsenrichtung ein maximaler Abstand von der Rotationsmittelachse (CL) zu einer Innenfläche des hohlen Abschnitts (Q) des Zapfens (103) so eingestellt ist, dass er größer als ein minimaler Abstand von der Rotationsmittelachse (CL) zum Sensorbeherbergungsabschnitt (P) ist.

2. Sensorrolleneinheit (1) nach Anspruch 1, wobei
der hohle Abschnitt (Q) des Zapfens (103) auf dem Schnitt senkrecht zur Achsenrichtung eine kreisförmige Form hat.

3. Sensorrolleneinheit (1) nach Anspruch 2, wobei
der hohle Abschnitt (Q) des Zapfens (103) um die Rotationsmittelachse (CL) herum eine zylinderförmige Form aufweist.

4. Sensorrolleneinheit (1) nach einem der Ansprüche 1 bis 3, wobei
der Sensorbeherbergungsabschnitt (P) eine zylinderförmige Form hat, die eine Mitte hat, die sich entlang der Achsenrichtung erstreckt.

5. Sensorrolleneinheit (1) nach Anspruch 1 oder 2, die außerdem Folgendes umfasst:
einen Kabelbündelabschnitt (104A), der von der Sensorrolle (101) aus gesehen auf der axial äußeren Seite des Zapfens (103) angeordnet ist, wobei der Kabelbündelabschnitt aus dem hohlen Abschnitt (Q) das Kabel (K) aufnimmt und das Kabel (K) bündelt.

6. Sensorrolleneinheit (1) nach Anspruch 1 oder 2, wobei
der hohle Abschnitt (Q) des Zapfens (103) einen sich verjüngenden Abschnitt (103A) hat, der so geneigt ist, dass er sich in Richtung des Sensorbeherbergungsabschnitts (P) aufspreizt.

## Revendications

1. Unité de rouleau de capteur (1) comprenant :
un rouleau de capteur (101) ayant un axe central de rotation (CL), et une partie de logement de capteur (P) capable de loger un capteur (110) et un câble (K) ; et
un tourillon (103) couplé au rouleau de capteur (101) le long de la direction de l'axe, dans laquelle
la partie du boîtier du capteur (P) est formée pour s'étendre le long de la direction de l'axe sur le côté radialement extérieur de l'axe du centre de rotation (CL), et
le tourillon (103) a une partie creuse (Q) communiquant avec la partie du boîtier du capteur (P) le long de la direction de l'axe et recevant le câble (K),
**caractérisé en ce que**,
sur une section perpendiculaire à la direction de l'axe, une distance maximale de l'axe central de rotation (CL) à une surface intérieure de la partie creuse (Q) du tourillon (103) est définie pour être plus grande qu'une distance minimale de l'axe central de rotation (CL) à la partie du boîtier du capteur (P).

2. Unité de rouleau de capteur (1) selon la revendication 1, dans laquelle
la partie creuse (Q) du tourillon (103) a une forme circulaire sur la section perpendiculaire à la direction de l'axe.

3. Unité de rouleau de capteur (1) selon la revendication 2, dans laquelle
la partie creuse (Q) du tourillon (103) comporte une forme cylindrique autour de l'axe central de rotation (CL).

4. Unité de rouleau de capteur (1) selon l'une des revendications 1 à 3, dans laquelle
la partie du boîtier du capteur (P) a une forme cylindrique ayant un centre qui s'étend le long de la direction de l'axe.

5. Unité de rouleau de capteur (1) selon la revendication 1 ou 2, comprenant en outre :
une partie de faisceau de câbles (104A) disposée sur le côté axialement extérieur du tourillon (103) en vue du rouleau de capteur (101), la partie de faisceau de câbles recevant le câble (K) de la partie creuse (Q) et regroupant le câble (K).

6. Unité de rouleau de capteur (1) selon la revendication 1 ou 2, dans laquelle
la partie creuse (Q) du tourillon (103) a une partie conique (103A) inclinée pour s'étendre vers la partie du boîtier du capteur (P).
